# EUROPÄISCHE PATENTSCHRIFT

(11) **EP 3 110 061 B1**
(45) Veröffentlichungstag und Bekanntmachung des Hinweises auf die Patenterteilung: **11.03.2020**
(21) Anmeldenummer: 16174742.3
(22) Anmeldetag: 16.06.2016
(51) Int. Cl.: H04L 12/26, H04L 12/24, H04L 12/08, H04L 1/20, G05B 9/03, G06F 11/16, H04L 1/22, G06F 11/07, H04L 29/08

(54) **VERTEILTES ECHTZEITCOMPUTERSYSTEM SOWIE VERFAHREN ZUR ERZWINGUNG DES FAIL-SILENT-VERHALTENS EINES VERTEILTEN ECHTZEITCOMPUTERSYSTEMS**
DISTRIBUTED REAL TIME COMPUTER SYSTEM AND METHOD FOR IMPOSING THE FAIL SILENT BEHAVIOUR OF A DISTRIBUTED REAL TIME COMPUTER SYSTEM
SYSTEME INFORMATIQUE EN TEMPS REEL DISTRIBUE ET PROCEDE DE FORÇAGE DE DEFAILLANCE

(30) Priorität: 23.06.2015 AT 505282015
(43) Veröffentlichungstag der Anmeldung: 28.12.2016
(73) Patentinhaber: TTTech Auto AG, 1040 Wien (AT)
(72) Erfinder: KOPETZ, Hermann, 2500 Baden (AT); POLEDNA, Stefan, 3400 Klosterneuburg (AT)
(74) Vertreter: Patentanwaltskanzlei Matschnig & Forsthuber OG

(56) Entgegenhaltungen:
- WO-A1-2013/123543
- STEININGER A ET AL: "On the necessity of on-line-BIST in safety-critical applications-a case-study", FAULT-TOLERANT COMPUTING, 1999. DIGEST OF PAPERS. TWENTY-NINTH ANNUAL INTERNATIONAL SYMPOSIUM ON MADISON, WI, USA 15-18 JUNE 1999, LOS ALAMITOS, CA, USA,IEEE COMPUT. SOC, US, 15. Juni 1999 (1999-06-15), Seiten 208-215, XP032147914, DOI: 10.1109/FTCS.1999.781052 ISBN: 978-0-7695-0213-7
- KOPETZ H ET AL: "The transparent implementation of fault tolerance in the time-triggered architecture", DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 191-205, XP010366438, DOI: 10.1109/DCFTS.1999.814296 ISBN: 978-0-7695-0284-7

## Beschreibung

Die Erfindung betrifft ein Verfahren zur Erzwingung des fail-silent Verhaltens eines periodisch arbeitenden, verteilten Echtzeitcomputersystems, welches Echtzeitcomputersystem mindestens zwei redundante NSCFCUs (non-self-checking fault-containment units) umfasst.

Weiters betrifft die Erfindung ein Echtzeitcomputersystem, insbesondere ein periodisch arbeitendes verteiltes Echtzeitcomputersystem, welches mit einem oder mehreren Sensoren verbunden werden kann.

Die Erfindung liegt im Bereich der Computertechnik. Sie beschreibt ein Verfahren und eine Vorrichtung zur Erzwingung eines fail-silent Verhaltens eines verteilten Echtzeitcomputersystems.

In vielen Anwendungen von Echtzeitsystemen-z.B. dem computergesteuerten pilotierten Führen eines Kraftfahrzeuges-muss gewährleistet sein, dass selbst nach Auftreten eines transienten oder permanenten Fehlers in der Computerhardware die Sicherheit der Anwendung nicht beeinträchtigt wird.

In den vergangenen Jahren wurden - aufgrund des rasanten Fortschritts der Hardwaretechnik - im Bereich der Konsumelektronik sehr leistungsfähige Systems-on-a-Chip (SoCs) entwickelt, die in großen Stückzahlen produziert und zu verhältnismäßig günstigen Kosten am Markt angeboten werden. Ein Beispiel für einen solchen SoC ist der SnapDragon der Firma Quallcomm [5].

Diese SoCs werden in einer sehr fortgeschrittenen Fertigungstechnologie-z.B. mit einer Strukturgröße von 20 nm-gefertigt. Bei diesen extrem kleinen Strukturen ist das vermehrte Auftreten von transienten Hardwarefehlern nicht auszuschließen [3].

Eine Architektur für ein sicherheitsrelevantes Computersystem muss auch nach dem Auftreten eines solchen Hardwarefehlers die Sicherheit der Anwendung gewährleisten.

Es ist eine Aufgabe der vorliegenden, eine Lösung dafür anzugeben, wie dieses oben genannte Ziel unter ökonomisch vertretbaren Rahmenbedingungen erreicht werden kann.

Diese Aufgabe wird mit einem eingangs erwähnten Verfahren dadurch gelöst, dass erfindungsgemäß von dem verteilten Echtzeitcomputersystem eine globale Zeit bereitgestellt wird, die den Beginn eines Frames festlegt, und wobei zu Beginn eines Frames die zumindest zwei redundanten NSCFCUs mit den gleichen Eingabedaten versorgt werden, wobei jede der redundanten NSCFCUs, vorzugsweise mittels eines deterministischen Algorithmus, ein Ergebnis, insbesondere aus den Eingabedaten, errechnet, und wobei dieses Ergebnis mit einer *end-to-end Signatur* in ein CSDP (closed signed data packet) verpackt wird, und wobei die CSDPs der NSCFCU zu einem a priori festgelegten Tick der globalen Zeit an eine SCFCU (self-checking fault-containment unit) übermittelt werden, und wobei die SCFCU überprüft, ob die Bitmusters der empfangenen CSDPs identisch sind, und, falls eine Ungleichheit der Bitmuster festgestellt wird, die weitere Übertragung der CSDPs, insbesondere jener CSDPs, bei welchen eine Ungleichheit festgestellt wurde, unterbindet.

Weiters wird die oben genannte Aufgabe mit einem eingangs erwähnten Echtzeitcomputersystem, insbesondere einem verteilten periodisch arbeitenden Echtzeitcomputersystem, gelöst, bei welchem erfindungsgemäß zur Erzwingung eines fail-silent Verhaltens das Echtzeitcomputersystem mindestens zwei redundante NSCFCUs und eine SCFCU umfasst, wobei jeder Sensor mit jeder der NSCFCUs, vorzugsweise über je zumindest einen Kommunikationskanal, verbunden werden kann, und wobei die mindestens zwei redundanten NSCFCUs, die vorzugsweise zu Beginn eines Frames von dem oder den Sensoren mit den gleichen Eingabedaten versorgt werden, dazu eingerichtet sind, vorzugsweise mittels eines deterministischen Algorithmus, jeweils ein Ergebnis zu errechnen, dieses Ergebnis mit einer *end-to-end Signatur* in ein CSDP (closed signed data packet) zu verpacken, und wobei die SCFCU dazu eingerichtet ist, CSDPs der NSCFCUs, insbesondere auf denselben Eingabedaten basierende CSDPs der NSCFCUs, entgegen zu nehmen und zu überprüfen, ob die Bitmusters der empfangenen CSDPs identisch sind, und die SCFCU weiters dazu eingerichtet ist, falls eine Ungleichheit der Bitmuster festgestellt wird, die weitere Übertragung der CSDPs, insbesondere jener CDSPs, bei welchen eine Ungleichheit festgestellt wurde, zu unterbinden.

Erkennt also das SCFCU eine Ungleichheit in CSDPs, welche auf den gleichen Eingabedaten basieren, so ist zumindest eine dieser CSDPs fehlerhaft und es wird die weitere Übertragung dieser CSDPs, für die eine Ungleichheit festgestellt wurde, unterbunden. Unter der "weiteren" Übertragung ist dabei die Übertragung an weitere Komponenten in dem Echtzeitcomputersystem oder außerhalb des Echtzeitcomputersystems zu verstehen.

Ein deterministischer Algorithmus ist ein Algorithmus, der bei gleichen Eingabedaten immer die gleichen Ausgabedaten bzw. Ergebnisse erzeugt.

Die vorliegende Erfindung offenbart eine Echtzeitcomputersystem und Verfahren, bei welchem durch die Anordnung von redundanten SoCs, die ein unterschiedliches Fehlerverhalten aufweisen, die Sicherheit der Anwendung auch nach Auftreten eines Fehlers in einem SoC aufrechterhalten werden kann.

Grundsätzlich muss zwischen zwei Anwendungsklassen unterschieden werden, fail-safe Anwendungen und fail-operational Anwendungen.

Bei einer fail-safe Anwendung gibt es im Gesamtsystem einen sicheren Zustand, der im Fehlerfall angesteuert werden kann. Das Computersystem muss in diesen Anwendungen entweder richtig funktionieren oder keine Ausgabe tätigen, d.h. es muss ein fail-silent Verhalten zeigen.

Zum Beispiel ist die Funktion des mechanischen Bremssystems der sichere Zustand des computergesteuerten Antiblockiersystem in einem Fahrzeug. Wenn im computergesteuerten Antiblockiersystem ein Fehler erkannt wird, dann wird die computergesteuerte Antiblockierfunktion ausgeschaltet. Die Funktion des mechanischen Bremssystems steht weiter zur Verfügung.

In einem periodischen zeitgesteuerten System ist a priori festgelegt, zu welchen wiederkehrenden Ausgabezeitpunkten ein Resultat des Computersystems vorliegen muss. Tritt ein fail-silent Fehler auf und produziert das Computersystem zum geplanten Ausgabezeitpunkt kein Resultat, so wird dieser Ausfall mit einer sehr kurzen Fehlererkennungslatenz unmittelbar nach dem geplanten Ausgabezeitpunkt erkannt.

In einer fail-operational Anwendung, z.B. bei der Steuerung eines Flugzeugs, gibt es keinen sicheren Zustand. In diesem Fall muss das Computersystem auch nach Auftreten eines Fehlers funktionieren. Ein fail-operational Computersystem kann durch die Anordnung von zwei redundanten unabhängigen fail-silent Computersystemen realisiert werden [2, p.156].

Es wird angenommen, dass das vorgeschlagene fail-silent System aus einer Anzahl von Komponenten besteht, die über Nachrichten Informationen austauschen. Unter dem Begriff einer Komponente wird eine Baueinheit verstanden, die Daten verarbeiten oder transportieren kann.

Eine Komponente ist eine Fault-Containment Unit (FCU), wenn die unmittelbaren Folgen einer Fehlerursache ausschließlich auf diese Komponente beschränkt bleiben [2, p.137]. Die mittelbaren Folgen eines Fehlers einer FCU sind der Ausfall einer erwarteten Nachricht oder eine fehlerhafte Nachricht. Eine FCU, die im Fehlerfall keine Nachricht sendet bezeichnet man als selbstprüfende FCU (fail-silent FCU oder self-checking FCU, abgekürzt SCFCU).

Ein Fehler einer FCU kann entweder durch einen physikalischen Fehler der Hardware (Hardwarefehler) oder durch einen Fehler im Entwurf (Softwarefehler) verursacht werden.

Wenn die Software, die in einer FCU eingesetzt wird so einfach ist, dass sie formal überprüft und umfassend getestet werden kann, so ist die Annahme gerechtfertigt, dass Entwurfsfehler im Betrieb nicht auftreten.

Es wird zwischen folgenden drei FCU Arten unterschieden:

| Bezeichnung | Fehlerart | Beispiel |
|---|---|---|
| NSCFCU_1 non-selfchecking FCU_1 | beliebig | SoC aus der Konsumelektronik, kann im Fehlerfall beliebige falsche Resultate produzieren. |
| NSCFCU_2 non-selfchecking FCU_2 | eingeschränkt beliebig | Nachrichtenverteilereinheit kann Nachrichten falsch vermitteln, jedoch den Nachrichteninhalt nicht konsistent ändern. |
| SCFCU selfchecking FCU | fail-silent | Self-checking (selbstprüfender) Chip aus der Echtzeitdatenverarbeitung terminiert bei Auftreten eines Fehlers. |

Eine NSCFCU_1 produziert aus den Eingabedaten geschlossene signierte Datenpakete (closed signed data packets, abgekürzt CSDP). Wir bezeichnen ein SDP (signed data packet) als geschlossen, wenn der Dateninhalt durch eine end-to-end Signatur gesichert und die Signatur Teil des Datenpakets ist. Der Algorithmus, der die end-to-end Signatur errechnet, ist nur dem Sender und Empfänger der Nutzdaten bekannt.

Eine NSCFCU_2 vermittelt CSDPs, hat aber keine Kenntnis vom Algorithmus, der die end-to-end Signatur errechnet. Es wird angenommen, dass ein beliebiger Hardwarefehler in einer NSCFCU_2, der das Bitmuster eines CSDP verändert, erkannt werden kann, wenn ein Empfänger überprüft, ob die Nutzlast (Payload) des Datenpakets mit der end-to-end Signatur übereinstimmt.

Eine SCFCU (selfchecking FCU) besteht aus zwei Hardware-Baueinheiten, deren Resultate von einem self-checking checker verglichen werden [4]. Sind die Resultate der beiden Baueinheiten unterschiedlich, so unterbindet die SCFCU die Ausgabe des fehlerhaften CSDP. Tritt in einer SCFCU ein Fehler auf, so wird das System abgeschaltet. Auf diese Weise wird das fail-silent Verhalten des Systems auch bei Auftreten eines Hardwarefehlers realisiert.

Bei der vorliegenden Erfindung werden die periodischen Eingabedaten gleichzeitig - d.i. beim gleichen Tick der globalen Zeit- zwei unabhängigen NSCFCU_1 zur Berechnung übergeben, wobei jede der beiden NSCFCU_1 mit demselben, vorzugsweise deterministischen, Algorithmus jeweils ein CSDP als Ausgabe produzieren. Diese beiden CSDP werden, vorzugsweise von einer oben beschriebenen NSCFCU_2, zu einer SCFCU vermittelt. Die SCFCU überprüft, ob die Bitgleichheit der beiden CSDP gegeben ist. Unterscheiden sich die Bitmuster der beiden CSDP voneinander, so wird von der SCFCU z.B. ein Transceiver, der die CSDPs Signale beispielsweise auf eine serielle Ausgabeleitung umsetzt, abgeschaltet.

Von Vorteil für die Erfindung, d.h. für das erfindungsgemäße Verfahren oder Echtzeitcomputersystem, kann es sein, wenn
- die SCFCU im Falle, dass ein CSDP von einer der NSCFCU nicht empfangen wird, die weitere Übertragung des anderen CSDPs unterbindet;
- die SCFCU im fehlerfreien Fall, z.B. über eine Kontrollleitung, ein Freigabesignal an einen Transceiver übermittelt und im Fehlerfall dieses Freigabesignal abschaltet oder nicht übermittelt, damit die weitere Übertragung der CSDPs an nachfolgende Komponenten, z.B. die Übertragung über einen Kommunikationskanal, verhindert wird;
- bei Ausfall der SCFCU die weitere Übertragung der CSDPs an die nachfolgenden Komponenten unterbunden wird;
- bei Ausfall der SCFCU und damit des Freigabesignals auf der Kontrollleitung der Transceiver die weitere Übertragung der CSDPs an die nachfolgenden Komponenten über den Kommunikationskanal unterbindet;
- eine zeitgesteuerte Nachrichtenvermittlungseinheit die Ausgabe der CSDPs an den Transceiver so lange verzögert, bis die SCFCU den Vergleich der redundanten CSDPs abgeschlossen hat;
- die SCFCU über einen Kommunikationskanal Fehlermeldungen an eine Monitorkomponente sendet;
- das Echtzeitcomputersystem eine Verteilereinheit umfasst, wobei eine NSCFCU über einen Kommunikationskanal mit der Verteilereinheit und eine weitere NSCFCU über einen weiteren Kommunikationskanal mit der Verteilereinheit verbunden ist;
- das Echtzeitcomputersystem einen Transceiver umfasst, wobei die Verteilereinheit über einen Kommunikationskanal mit dem Transceiver und über einen Kommunikationskanal mit der SCFCU verbunden ist, und wobei eine Kontrollleitung von der SCFCU zu dem Transceiver führt;
- in einem Kommunikationskanal des Echtzeitcomputersystems, der eine NSCFCU mit der Verteilereinheit verbindet, ein Protokollwandler angeordnet ist;
- in dem Kommunikationskanal des Echtzeitcomputersystems, der die Verteilereinheit mit dem Transceiver verbindet, ein Protokollwandler angeordnet ist;
- die zwei redundanten NSCFCUs des Echtzeitcomputersystems in einer Baueinheit zusammengefasst sind;
- die Verteilereinheit, die SCFCU und die Protokollwandler des Echtzeitcomputersystems in einer Baueinheit zusammengefasst sind.

Die oben genannten vorteilhaften Weiterbildungen können jede für sich alleine oder in beliebiger Kombination realisiert sein.

Im Folgenden ist die Erfindung an Hand einer beispielhaften Ausführungsform näher erläutert. In dieser zeigt
Fig. 1 die Komponenten eines verteilten Computersystems und deren Verbindungen, und
Fig. 2 einen möglichen Aufbau des Systems in Baueinheiten.

Das folgende konkrete Beispiel behandelt eine der vielen möglichen Realisierungen des neuen Verfahrens.

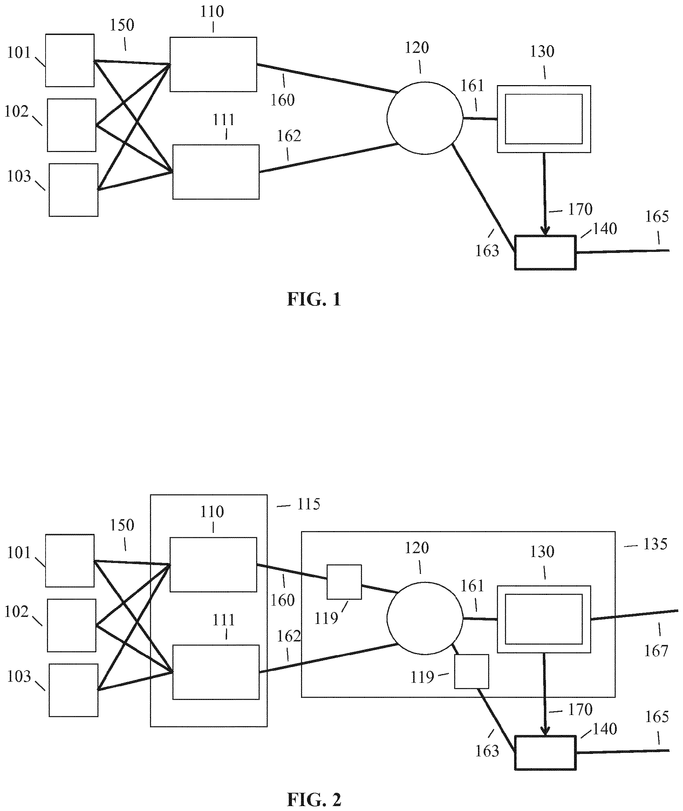

In Fig. 1 sind am linken Rand drei Sensoren die Sensoren 101, 102, 103 angeordnet. Beispiele für Sensoren sind eine Kamera, ein Laser oder ein Radarsensor. Generell handelt es sich bei einem Sensor um ein Bauteil oder eine Baueinheit, welche Eingabedaten produzieren kann. Diese Sensoren beobachten die Umgebung und senden periodisch zum Beginn eines Frames redundante Nachrichten über die Kommunikationskanäle 150 an die beiden redundanten NSCFCUs 110, 111. Ein Frame ist ein sich periodisch wiederholender Abschnitt auf der Zeitachse, dessen Beginn über die globale Zeit synchronisiert wird.

Die Nachrichten der Sensoren können Eingabedaten für die NSCFCUs enthalten.

Die NSCFCU 110 errechnet mittels einer deterministischen Software/Algorithmus, beispielsweise basierend auf der oder den von dem oder den Sensoren übermittelten Nachricht(en) bzw. übermittelten Eingabedaten, ein Ergebnis, z.B. führt die NSCFCU 110 die Fusion der Sensordaten, die sehr aufwendig sein kann, durch. Nach Vorliegen des Ergebnisses errechnet die NSCFCU 110 mittels eines nur ihr und dem endgültigen Empfänger der Daten bekannten Algorithmus eine end-to-end Signatur, die den Ergebnisdaten hinzugefügt wird und bildet damit ein closed signed data packet, abgekürzt CSDP. Dieses CSDP wird über einen Kommunikationskanal 160 an eine Vermittlungseinheit 120 gesendet.

Die NSCFCU 111 führt gleichzeitig, insbesondere basierend auf der oder den gleichen Nachrichten bzw. Eingabedaten, die gleichen Operationen durch wie die NSCFCU 110 und produziert ein zweites CSDP und sendet dieses zweite CSDP über einen Kommunikationskanal 162 an die Vermittlungseinheit 120.

Im fehlerfreien Fall sind die Bitmuster der beiden CSDP identisch. Wenn in einem der NSCFCUs ein Fehler auftritt, so sind die Bitmuster der beiden CSDP unterschiedlich.

Die beiden CSDPs werden von der Vermittlungseinheit 120 über einen Kommunikationskanal 161 an eine SCFCU 130 und, vorzugsweise zeitlich verzögert, über einen Kommunikationskanal 163 an einen Transceiver 140 gesendet. Der Transceiver 140 ist jener Bauteil, der für das sequentielle Senden und Empfangen der Bitströme einer Nachricht auf dem Übertragungsmedium zuständig ist.

Die SCFCU 130 vergleicht die Bitmuster der beiden CSDPs. Weichen die Bitmuster der beiden CSDPs voneinander ab, so wird das Freigabesignal, das z.B. über eine Leitung 170 an den Transceiver 140 geht, unterbunden und der Transceiver 140 unterbricht in der Folge das Senden von Nachrichten auf einer Leitung 165.

Die zeitliche Verzögerung des CSDP in der zeitgesteuerten Verteilereinheit 120 vor dem Kommunikationskanal 163 zu dem Transceiver 140 wird bestimmt durch die Dauer, die die SCFCU 130 benötigt um den Vergleich der beiden CSDPs durchzuführen.

Wenn nur ein CSDP von den beiden NSCFCU 110, 111 bei der SCFCU 130 eintrifft, so wird vorzugsweise das Freigabesignal auf der Leitung 170 ebenfalls unterbunden und der Transceiver 140 unterbricht das Senden von Nachrichten auf der Leitung 165.

Tritt in der SCFCU 130 ein Fehler auf, so fällt das Freigabesignal auf der Leitung 170 aus und der Transceiver 140 unterbricht das Senden von Nachrichten auf der Leitung 165.

In Fig. 2 ist die Zusammenfassung der Komponenten zu Baueinheiten dargestellt. In der Baueinheit 115 befinden sich die Komponenten 110 und111, in der Baueinheit 135 sind die Komponenten 120,130 und optional noch eine Komponente 119 integriert.

Die Komponente 119 ist ein Protokollwandler, der die Umsetzung zwischen zwei unterschiedlichen Kommunikationsprotokollen vornimmt, wobei das Bitmuster im CSDP im Rahmen der Umsetzung nicht verändert wird. Z.B. kann der Protokollwandler 119 das PCIe Protokoll in ein TTEthernet Protokoll oder die Umsetzung des TTEthernet Protkolls in ein CAN FD Protokoll vornehmen.

Über eine Kontrollleitung 167 kann die SCFCU 130 Fehlermeldungen an eine Monitorkomponente senden.

Mit zwei parallel arbeitenden Systemen, wie es in Fig. 2 dargestellt ist, kann ein fail-operational Verhalten des Echtzeitsystems realisiert werden. Ein solches System umfasst dabei die Baueinheiten 115 und 135, welche jeweils die Eingabedaten - in dem gezeigten Beispiel von den drei - Sensoren 101,102,103 erhält.

Das offen gelegte Verfahren ermöglicht den Einsatz von leistungsfähigen und preiswerten SoCs der Konsumelektronik in sicherheitsrelevanten Systemen. Es ist daher von großer wirtschaftlicher Bedeutung.

### Zitierte Literatur:

[1] WO 2016/033629
   [1'] STEININGER A ET AL: "On the necessity of on-line-BIST in safety-critical applications-a case-study", FAULT-TOLERANT COMPUTING, 1999. DIGEST OF PAPERS. TWENTY-NINTH ANNUAL INTERNATIONAL SYMPOSIUM ON MADISON, WI, USA 15-18 JUNE 1999, LOS ALAMITOS, CA, USA,IEEE COMPUT. SOC, US, 15. Juni 1999 (1999-06-15), Seiten 208-215,, DOI: 10.1109/FTCS.1999.781052 ISBN: 978-0-7695-0213-7
[2] Kopetz, H.. Real-time Systems-Design Principles for Distributed Embedded Applications. Springer Verlag, 2011.
[3] Constantinescu, C. Trends and Challenges in VLSI Circuit Reliability. IEEE Micro.Vol 23, No.4., pp. 14-19. July 2003.
[4] Anderson, D., Metze G. Design of totally self-checking check circuits for m-out-of-n codes. IEEE Trans. on Computers. Vol. C-22, pp.263-269. March 1973.
[5] Qualcomm. Snapdragon. URL: www.qualcomm.com/products/snapdragon accessed on June16, 2015.

## Patentansprüche

1. Verfahren zur Erzwingung des fail-silent Verhaltens eines periodisch arbeitenden, verteilten Echtzeitcomputersystems, welches mit einem oder mehreren Sensoren (101, 102, 103) verbunden werden kann, welches Echtzeitcomputersystem mindestens zwei redundante NSCFCUs, non-self-checking fault containment units, umfasst, **dadurch gekennzeichnet, dass** von dem verteilten Echtzeitcomputersystem eine globale Zeit bereitgestellt wird, die den Beginn eines Frames festlegt, und wobei zu Beginn eines Frames die zumindest zwei redundanten NSCFCUs (110, 111) mit den gleichen Eingabedaten von dem oder den Sensoren versorgt werden, wobei jede der redundanten NSCFCUs, vorzugsweise mittels eines deterministischen Algorithmus, ein Ergebnis, insbesondere aus den Eingabedaten, errechnet, und wobei dieses Ergebnis mit einer *end-to-end Signatur* in ein CSDP, closed signed data packet, verpackt wird, und wobei die CSDPs der NSCFCU (110, 111) zu einem a priori festgelegten Tick der globalen Zeit an eine SCFCU, self-checking fault containment unit, (130) übermittelt werden, und
wobei die SCFCU (130) überprüft, ob die Bitmusters der empfangenen CSDPs identisch sind, und, falls eine Ungleichheit der Bitmuster festgestellt wird, die weitere Übertragung der CSDPs, insbesondere jener CSDPs, bei welchen eine Ungleichheit festgestellt wurde, unterbindet.

2. Verfahren nach Anspruch 1, **dadurch gekennzeichnet, dass** die SCFCU (130) im Falle, dass ein CSDP von einer der NSCFCU (110, 111) nicht empfangen wird, die weitere Übertragung des anderen CSDPs unterbindet.

3. Verfahren nach Anspruch 1 oder 2, **dadurch gekennzeichnet, dass** die SCFCU (**130**) im fehlerfreien Fall, z.B. über eine Kontrollleitung (170), ein Freigabesignal an einen Transceiver (140) übermittelt und im Fehlerfall dieses Freigabesignal abschaltet oder nicht übermittelt, damit die weitere Übertragung der CSDPs an nachfolgende Komponenten, z.B. die Übertragung über einen Kommunikationskanal (165), verhindert wird.

4. Verfahren nach einem der Ansprüche 1 bis 3, **dadurch gekennzeichnet, dass** bei Ausfall der SCFCU (130) die weitere Übertragung der CSDPs an die nachfolgenden Komponenten unterbunden wird.

5. Verfahren nach Anspruch 3 in Kombination Anspruch 4, **dadurch gekennzeichnet, dass** bei Ausfall der SCFCU (130) und damit des Freigabesignals auf der Kontrollleitung (170) der Transceiver (140) die weitere Übertragung der CSDPs an die nachfolgenden Komponenten über den Kommunikationskanal (165) unterbindet.

6. Verfahren nach einem der Ansprüche 3 bis 5, **dadurch gekennzeichnet, dass** eine zeitgesteuerte Nachrichtenvermittlungseinheit (120) die Ausgabe der CSDPs an den Transceiver (140) so lange verzögert, bis die SCFCU (130) den Vergleich der redundanten CSDPs abgeschlossen hat.

7. Verfahren nach einem der Ansprüche 1 bis 6, **dadurch gekennzeichnet, dass** die SCFCU (130) über einen Kommunikationskanal (167) Fehlermeldungen an eine Monitorkomponente sendet.

8. Echtzeitcomputersystem, insbesondere periodisch arbeitendes verteiltes Echtzeitcomputersystem, welches mit einem oder mehreren Sensoren (101,102,103) verbunden werden kann,
**dadurch gekennzeichnet, dass** von dem verteilten Echtzeitcomputersystem eine globale Zeit bereitgestellt wird, die den Beginn eines Frames festlegt, und wobei zur Erzwingung eines fail-silent Verhaltens das Echtzeitcomputersystem mindestens zwei redundante NSCFCUs (110, 111) und eine SCFCU (130) umfasst, wobei jeder Sensor (101, 102, 103) mit jeder der NSCFCUs (110, 111), vorzugsweise über je zumindest einen Kommunikationskanal (150), verbunden werden kann, und wobei die mindestens zwei redundanten NSCFCUs (110, 111), die vorzugsweise zu Beginn eines Frames von dem oder den Sensoren mit den gleichen Eingabedaten versorgt werden, dazu eingerichtet sind, vorzugsweise mittels eines deterministischen Algorithmus, jeweils ein Ergebnis zu errechnen, dieses Ergebnis mit einer *end-to-end Signatur* in ein CSDP, closed signed data packet, zu verpacken, und wobei die SCFCU (130) dazu eingerichtet ist, CSDPs der NSCFCUs (110, 111), insbesondere auf denselben Eingabedaten basierende CSDPs der NSCFCUs, entgegen zu nehmen und zu überprüfen, ob die Bitmusters der empfangenen CSDPs identisch sind, und die SCFCU (130) weiters dazu eingerichtet ist, falls eine Ungleichheit der Bitmuster festgestellt wird, die weitere Übertragung der CSDPs, insbesondere jener CDSPs, bei welchen eine Ungleichheit festgestellt wurde, zu unterbinden.

9. Echtzeitcomputersystem nach Anspruch 8, **dadurch gekennzeichnet, dass** es eine Verteilereinheit (120) umfasst, wobei eine NSCFCU (110) über einen Kommunikationskanal (160) mit der Verteilereinheit (120) und eine weitere NSCFCU (111) über einen weiteren Kommunikationskanal (162) mit der Verteilereinheit (120) verbunden ist.

10. Echtzeitcomputersystem nach Anspruch 9, **dadurch gekennzeichnet, dass** es einen Transceiver (140) umfasst, wobei die Verteilereinheit (120) über einen Kommunikationskanal (163) mit dem Transceiver (140) und über einen Kommunikationskanal (161) mit der SCFCU (130) verbunden ist, und wobei eine Kontrollleitung (170) von der SCFCU (130) zu dem Transceiver (140) führt.

11. Echtzeitcomputersystem nach Anspruch 9 oder 10, **dadurch gekennzeichnet, dass** in einem Kommunikationskanal (160), der eine NSCFCU (110) mit der Verteilereinheit (120) verbindet, ein Protokollwandler (119) angeordnet ist.

12. Echtzeitcomputersystem nach Anspruch 10 oder 11, **dadurch gekennzeichnet, dass** in dem Kommunikationskanal (163), der die Verteilereinheit (120) mit dem Transceiver (140) verbindet, ein Protokollwandler (119) angeordnet ist.

13. Echtzeitcomputersystem nach einem der Ansprüche 8 bis 12, **dadurch gekennzeichnet, dass** die zwei redundanten NSCFCUs (110, 111) in einer Baueinheit (115) zusammengefasst sind.

14. Echtzeitcomputersystem nach einem der Ansprüche 8 bis 13, **dadurch gekennzeichnet, dass** die Verteilereinheit (120), die SCFCU (130) und die Protokollwandler (119) in einer Baueinheit (135) zusammengefasst sind.

15. Echtzeitcomputersystem nach einem der Ansprüche 8 bis 14, **dadurch gekennzeichnet, dass** es mit einem oder mehreren Sensoren (101, 102, 103) verbunden ist.

## Claims

1. Method for forcing fail-silent behavior of a periodically functioning, distributed real-time computer system which may be connected to one or more sensors (101, 102,103), which real-time computer system comprises at least two redundant NSCFCUs, non-self-checking fault-containment units, **characterized in that** a global time is made available by the distributed real-time computer system, which time establishes the beginning of a frame, and wherein the at least two redundant NSCFCUs (110, 111) are supplied with the same input data from the sensor or the sensors at the beginning of a frame, wherein each of the redundant NSCFCUs calculates a result, preferably by means of a deterministic algorithm, particularly from the input data, and wherein this result is packed into a CSDP, closed signed data packet, with an *end-to-end signature,* and wherein the CSDPs of the NSCFCUs (110, 111) are transmitted to an SCFCU, self-checking fault-containment unit, (130) at a tick of the global time that has been established a priori, and wherein the SCFCU (130) checks whether the bit patterns of the received CSDPs are identical, and, if disparity of the bit patterns is found, prevents further transmission of the CSDPs, particularly those CSDPs in which disparity was found.

2. Method according to Claim 1, **characterized in that** the SCFCU (130) prevents further transmission of the other CSDP in the event that a CSDP is not received by one of the NSCFCUs (110, 111).

3. Method according to Claim 1 or 2, **characterized in that** the SCFCU (130) transmits a release signal to a transceiver (140) in the failure-free case, for example by way of a control line (170), and, in the event of failure, shuts off or does not transmit this release signal, so that further transmission of the CSDPs to subsequent components, for example transmission by way of a communication channel (165), is prevented.

4. Method according to one of Claims 1 to 3, **characterized in that** in the event of failure of the SCFCU (130), further transmission of the CSDPs to the subsequent components is prevented.

5. Method according to Claim 3 in combination with Claim 4, **characterized in that** in the event of failure of the SCFCU (130) and thereby of the release signal on the control line (170), the transceiver (140) prevents further transmission of the CSDPs to the subsequent components by way of the communication channel (165).

6. Method according to one of Claims 3 to 5, **characterized in that** a time-controlled message relay unit (120) delays output of the CSDPs to the transceiver (140) until the SCFCU (130) has completed the comparison of the redundant CSDPs.

7. Method according to one of Claims 1 to 6, **characterized in that** the SCFCU (130) transmits failure messages to a monitor component by way of a communication channel (167).

8. Real-time computer system, particularly periodically functioning distributed real-time computer system, which may be connected to one or more sensors (101, 102, 103), which can be connected with one or more sensor(s) (101, 102, 103), **characterized in that** a global time is made available by the distributed real-time computer system, which time establishes the beginning of a frame, and wherein in order to force fail-silent behavior, the real-time computer system comprises at least two redundant NSCFCUs (110, 111) and an SCFCU (130), wherein each sensor (101, 102, 103) can be connected with each of the NSCFCUs (110, 111), preferably by way of at least one communication channel (150), in each instance, and wherein the at least two redundant NSCFCUs (110, 111), which are supplied with the same input data by the sensor(s), preferably at the beginning of a frame, are set up for calculating a result, in each instance, preferably by means of a deterministic algorithm, packing this result into a CSDP, closed signed data packet, with an *end-to-end signature,* and wherein the SCFCU (130) is set up for receiving CSDPs of the NSCFCUs (110, 111), particularly CSDPs of the NSCFCUs based on the same input data, and for checking whether the bit patterns of the received CSDPs are identical, and the SCFCU (130) is furthermore set up for preventing further transmission of the CSDPs if disparity of the bit patterns was found, particularly of those CDSPs {sic - should be CSDPs} in which disparity was found.

9. Real-time computer system according to Claim 8, **characterized in that** it comprises a distributor unit (120), wherein an NSCFCU (110) is connected with the distributor unit (120) by way of a communication channel (160), and a further NSCFCU (111) is connected with the distributor unit (120) by way of a further communication channel (162).

10. Real-time computer system according to Claim 9, **characterized in that** it comprises a transceiver (140), wherein the distributor unit (120) is connected with the transceiver (140) by way of a communication channel (163), and with the SCFCU (130) by way of a communication channel (161), and wherein a control line (170) leads from the SCFCU (130) to the transceiver (140).

11. Real-time computer system according to Claim 9 or 10, **characterized in that** a protocol converter (119) is disposed in a communication channel (160), which connects an NSCFCU (110) with the distributor unit (120).

12. Real-time computer system according to Claim 10 or 11, **characterized in that** a protocol converter (119) is disposed in the communication channel (163), which connects the distributor unit (120) with the transceiver (140).

13. Real-time computer system according to one of claims 8 to 12, **characterized in that** the two redundant NSCFCUs (110, 111) are combined in a physical unit (115).

14. Real-time computer system according to one of Claims 8 to 13, **characterized in that** the distributor unit (120), the SCFCU (130), and the protocol converter (119) are combined in a physical unit (135).

15. Real-time computer system according to one of the claims 8 to 14, **characterized in that** it is connected to one or more sensors (101, 102, 103).

## Revendications

1. Procédé de forçage du comportement de silence sur défaillance d'un système informatique distribué en temps réel, fonctionnant périodiquement, lequel peut être connecté à un ou plusieurs capteurs (101, 102, 103), lequel système informatique en temps réel comporte au moins deux unités de confinement de pannes sans auto-contrôle, NSCFCU (« non-self-checking fault-containment units »), redondantes, **caractérisé par le fait qu'**un temps global est mis à disposition par le système informatique distribué en temps réel, lequel temps établit le début d'une trame, et dans lequel lesdites au moins deux NSCFCU redondantes (110, 111) reçoivent les mêmes données d'entrée par le ou les capteurs au début d'une trame, dans lequel chacune des NSCFCU redondantes calcule un résultat, de préférence au moyen d'un algorithme déterministe, en particulier à partir des données d'entrée, et dans lequel ce résultat est empaqueté en un paquet de données signé fermé, CSDP (« closed signed data packet »), avec une signature de bout en bout (« *end-to-end Signatur* »), et dans lequel les CSDP des NSCFCU (110, 111) sont transmis à une unité de confinement de pannes à autocontrôle, SCFCU (« self-checking fault-containment units ») (130) à un tic du temps global qui a été établi a priori, et dans lequel la SCFCU (130) contrôle si les motifs binaires des CSDP reçus sont identiques ou non, et, si une disparité des motifs binaires est trouvée, empêche la nouvelle transmission des CSDP, en particulier des CSDP dans lesquels une disparité a été trouvée.

2. Procédé selon la revendication 1, **caractérisé par le fait que** la SCFCU (130) empêche une nouvelle transmission des autres CSDP dans le cas où un CSDP n'est pas reçu par l'une des NSCFCU (110, 111).

3. Procédé selon l'une des revendications 1 ou 2, **caractérisé par le fait que** la SCFCU (130) transmet un signal de libération à un émetteur-récepteur (140) dans le cas exempt de panne, par exemple au moyen d'une ligne de commande (170), et, en cas de panne, désactive ou ne transmet pas ce signal de libération pour que la nouvelle transmission des CSDP à des composants subséquents, par exemple la transmission au moyen d'un canal de communication (165), soit empêchée.

4. Procédé selon l'une des revendications 1 à 3, **caractérisé par le fait qu'**en cas de panne de la SCFCU (130), la nouvelle transmission des CSDP aux composants subséquents est empêchée.

5. Procédé selon la revendication 3 en combinaison avec la revendication 4, **caractérisé par le fait qu'**en cas de panne de la SCFCU (130) et par conséquent du signal de libération sur la ligne de commande (170), l'émetteur-récepteur (140) empêche la nouvelle transmission des CSDP aux composants subséquents au moyen du canal de communication (165).

6. Procédé selon l'une des revendications 3 à 5, **caractérisé par le fait qu'**une unité de relais de message à commande temporelle (120) retarde la sortie des CSDP à l'émetteur-récepteur (140) jusqu'à ce que la SCFCU (130) ait terminé la comparaison des CSDP redondants.

7. Procédé selon l'une des revendications 1 à 6, **caractérisé par le fait que** la SCFCU (130) envoie des messages de panne à un composant moniteur au moyen d'un canal de communication (167).

8. Système informatique, en particulier système informatique en temps réel fonctionnant périodiquement, lequel peut être connecté à un ou plusieurs capteurs (101, 102, 103), **caractérisé par le fait qu'**un temps global est mis à disposition par le système informatique distribué en temps réel, lequel temps global établit le début d'une trame, et dans lequel, pour le forçage d'un comportement de silence sur défaillance, le système informatique en temps réel comporte au moins deux NSCFCU redondantes (110, 111) et une SCFCU (130), dans lequel chaque capteur (101, 102, 103) peut être connecté à chacune des NSCFCU (110, 111), de préférence au moyen d'au moins un canal de communication (150), et dans lequel lesdites au moins deux NSCFCU redondantes (110, 111), qui reçoivent les mêmes données d'entrée par le ou les capteurs, de préférence au début d'une trame, sont configurées pour calculer un résultat, dans chaque cas, de préférence au moyen d'un algorithme déterministe, empaqueter ce résultat en un paquet de données signé fermé, CSDP, avec une signature de bout en bout (« *end-to-end Signatur* »), et dans lequel la SCFCU (130) est configurée pour recevoir des CSDP des NSCFCU (110, 111), en particulier des CSDP des NSCFCU basés sur les mêmes données d'entrée, et pour contrôler si les motifs binaires des CSDP reçus sont identiques ou non, et la SCFCU (130) est en outre configurée pour empêcher, si une disparité des motifs binaires est trouvée, la nouvelle transmission des CSDP, en particulier des CSDP dans lesquels une disparité a été trouvée.

9. Système informatique en temps réel selon la revendication 8, **caractérisé par le fait qu'**il comporte une unité de distributeur (120), dans lequel une NSCFCU (110) est connectée à l'unité de distributeur (120) au moyen d'un canal de communication (160), et une nouvelle NSCFCU (111) est connectée à l'unité de distributeur (120) au moyen du nouveau canal de communication (162).

10. Système informatique en temps réel selon la revendication 9, **caractérisé par le fait qu'**il comporte un émetteur-récepteur (140), dans lequel l'unité de distributeur (120) est connectée à l'émetteur-récepteur (140) au moyen d'un canal de communication (163) et est connectée à la SCFCU (130) au moyen d'un canal de communication (161), et dans lequel une ligne de commande (170) conduit de la SCFCU (130) à l'émetteur-récepteur (140) .

11. Système informatique en temps réel selon l'une des revendications 9 ou 10, **caractérisé par le fait qu'**un convertisseur de protocole (119) est disposé dans un canal de communication (160) qui connecte une NSCFCU (110) à l'unité de distributeur (120).

12. Système informatique en temps réel selon l'une des revendications 10 ou 11, **caractérisé par le fait qu'**un convertisseur de protocole (119) est disposé dans le canal de communication (163) qui connecte l'unité de distributeur (120) à l'émetteur-récepteur (140).

13. Système informatique en temps réel selon l'une des revendications 8 à 12, **caractérisé par le fait que** les deux NSCFCU redondantes (110, 111) sont combinées en une unité physique (115).

14. Système informatique en temps réel selon l'une des revendications 8 à 13, **caractérisé par le fait que** l'unité de distributeur (120), la SCFCU (130) et le convertisseur de protocole (119) sont combinés en une unité physique (135).

15. Système informatique en temps réel selon l'une des revendications 8 à 14, **caractérisé par le fait qu'**il est connecté à un ou plusieurs capteurs (101, 102, 103) .
